# EUROPEAN PATENT SPECIFICATION

(11) **EP 3 298 902 B1**
(45) Date of publication and mention of the grant of the patent: **27.05.2020**
(21) Application number: 15880669.5
(22) Date of filing: 16.12.2015
(51) Int. Cl.: A23B 4/09

(54) **METHOD FOR DIPPING AND FREEZING TUNA USING LOW SALT PENETRATION AMOUNT OF CaCl2**
VERFAHREN ZUM EINTAUCHEN UND GEFRIEREN VON THUNFISCH MIT GERINGEM SALZPENETRATIONSGEHALT VON CACL2
PROCÉDÉ DE TREMPAGE ET DE CONGÉLATION DU THON À L'AIDE D'UNE FAIBLE QUANTITÉ DE PÉNÉTRATION DE SEL DE CaCl2

(30) Priority: 29.04.2015 CN 201510211323
(43) Date of publication of application: 28.03.2018
(73) Proprietor: Shanghai Ocean University, District Shanghai 201306 (CN)
(72) Inventor: XIE, Jing, Shanghai 201306 (CN); XU, Huiwen, Shanghai 201306 (CN); WANG, Jinfeng, Shanghai 201306 (CN); HUANG, Wenbo, Shanghai 201306 (CN); WU, Xingyin, Shanghai 201306 (CN)
(74) Representative: Osmans, Voldemars
(86) International application number: PCT/CN2015/097555
(87) International publication number: WO 2016/173272

(56) References cited:
- CN-A- 104 256 855
- CN-A- 104 782 739
- JP-A- S5 548 346
- JP-A- S60 192 544
- JP-A- S60 192 544
- JP-A- S61 162 128
- JP-A- 2007 215 535
- JP-A- 2007 215 535
- Louis J Ronsivalli ET AL: "Low Temperature Preservation of Seafoods: A Review", , 1 April 1981 (1981-04-01), XP55133105, Retrieved from the Internet: URL:http://spo.nmfs.noaa.gov/mfr434/mfr434 1.pdf [retrieved on 2014-08-04]
- LUCAS T ET AL: "Immersion chilling and freezing in aqueous refrigerating media: review and future trends - Refrigeration et congelation par immersion dans des milieux refrigerants: revue et tendances futures", INTERNATIONAL JOURNAL OF REFRIGERAT, ELSEVIER, PARIS, FR, vol. 21, no. 6, 1 September 1998 (1998-09-01), pages 419-429, XP004287256, ISSN: 0140-7007, DOI: 10.1016/S0140-7007(98)00014-0

## Description

### Technical Field

The invention relates to a method for freezing tuna, more particularly, to a method of freezing tuna by CaCl₂ solution.

### Background of the Invention

Tuna, delicate in meat and delicious in taste, is mainly used for omophagia. Tuna is generally captured in deep sea, and should be rapidly frozen within 36 hours after being captured, otherwise it is liable to undergo browning, so the freezing on fishing boat after capturing is very important. Traditional freezing methods are of low speed and poor quality, the quality of tuna meat is hard to reach omophagia standard. Immersion Chilling and Freezing (ICF) is a freezing mode with direct contact of cooling medium and frozen food, the cooling medium has the characteristics of non-toxicity, low temperature and high heat transfer, and immersion chilling and freezing by salt water is to select salt water as cooling medium, salt water is widely used in the freezing of aquatic products, fruits and vegetables due to its fast freezing speed and good quality. CaCl₂ salt water, in accordance with food hygiene requirements, is the common cooling medium in salt water freezing, and the eutectic point can reach minus 55 DEG C, minus 26 DEG C air freezing is as a contrast by Carolina (Freezing of strawberries by immersion in CaCl2 solutions, Food Chemistry, 2010, 123(2): 243-248), immersing the strawberries in CaCl₂ salt water under minus 20 DEG C and freezing to minus 10 DEG C, results show the time of freezing to minus 10 DEG C by CaCl₂ salt water is shortened 45min than that of air freezing, and the juice loss rate of strawberries frozen by CaCl₂ salt water is significantly reduced after thawing. Salt water freezing can improve freezing speed and reduce cost, however, the mutual penetration of solute and food component is the key to restrict the development of Immersion Chilling and Freezing (ICF) technology. The salt penetration amount is affected by salt water concentration and time of immersion chilling and freezing, the concentration of CaCl₂ salt water is higher, the solute content is higher, however, the solution temperature is lower, the freezing speed is faster, and the time of immersion chilling and freezing in CaCl₂ water is shorter, so it is very important to study the affect of CaCl₂ salt water with different concentration and different temperature on salt penetration amount of tuna salt water freezing and quality. Requirements are higher for the quality and taste of tuna as an uncooked fish fillet. The study about the impact of salt water freezing on taste and quality of aquatic products is rarely reported, so it is of great significance for further optimizing salt water freezing technology to study how to reduce the salt penetration while ensuring the quality of aquatic products.

A Japanese patent (JP2007215535A) discloses a quick freezing method for a fish body uses cold calcium chloride brine. The method includes following steps: (i) a process of precooling a fish body with cold seawater at -1°C to 3°C so as to decrease the central temperature of the fish body to 2°C-4°C; (ii) a process of soaking the fish body in cold calcium chloride brine at -55°C to -50°C until the central temperature of the fish body becomes -45°C to - 40°C so as to quickly freeze the fish body; and (iii) a process of preserving the frozen fish body at -42°C to -38°C. The central temperature of the fish body is extremely quickly decreased from 2°C-4°C to -5°C within 60 min by increasing fluidity of cold calcium chloride brine in the quickly freezing process. Another Japanese patent (JPS61162128A) discloses an oceanic bonito freezing method freezing an inside of a fish to less than -30 degree C in the state where an oceanic bonito was supplied near the maximum bottom part of a -35--40 degree C calcium-chloride-brine tub, a fish surface part was pre-cooled while rising to surface next, and you made it always completely immersed into the brine as it is. Another Japanese patent (JPS60192544A) discloses an method of production of frozen tuna, which includes: a tuna is frozen to a somewhat higher temperature at which meat splitting will not be caused in brine at -45 deg.C, pulled up once therefrom, transferred to an atmosphere at a temperature lower than the freezing point of the tuna (mostly in air), allowed to stand for about 3hr to uniformize the temperature of the surface and central parts of the fish body, and refrozen in brine to give <=-40 deg.C temperature at the central part

### Summary of the Invention

In the process of freezing tuna on fishing boat using existing immersion chilling and freezing technology by CaCl₂ salt water, the penetration of CaCl₂ salt water will affect the taste of tuna meat and reduce the quality, so the invention provides a method for immersion chilling and freezing tuna by CaCl₂ with a low salt penetration amount to reduce the affect of taste of tuna meat and quality. And the method is of low cost and simple operation, which can be widely used in freezing tuna on fishing boat.

The invention is a new method reducing the salt penetration amount in tuna meat and improving the quality.

The method of freezing tuna blocks by immersion chilling and freezing with CaCl₂ solution comprises following steps:
preparing a tuna; wherein the tuna is stored in a vacuum environment with a temperature of minus 55 DEG C for 5 minutes;
preparing a CaCl₂ solution with a mass concentrations of 29.40%; wherein the CaCl₂ solution has a freezing point of minus 50.1 DEG C;
placing the prepared CaCl₂ solution into a refrigerator set at minus 40 DEG C; and cooling the prepared CaCl₂ solution to minus 40 DEG C; wherein an error range of temperature of the refrigerator is +/-1 DEG C;
rapidly cutting the tuna into blocks under a sterile condition on a super clean bench; wherein a mass of each tuna block is (90±5) g and a size of each tuna block is 6cm^{∗}5cm^{∗}3cm;
completely immersing the tuna blocks in the CaCl₂ solution and taking out the tuna blocks from the CaCl₂ solution when a central temperature of the tuna blocks achieves minus 18∼minus 25 DEG C..

Chilling condition of CaCl₂ salt water: preparing 400g of the CaCl₂ salt water with the mass concentrations of 25.70%, 27.50%, 28.40% and 29.40% respectively, and the corresponding freezing point is minus 31.2 DEG C, minus 38.6 DEG C, minus 43.6 DEG C and minus 50.1 DEG C respectively.

Chilling mode of CaCl₂ salt water: placing the prepared salt water in 600mL of the beaker, placing respectively in refrigerators at minus 25 DEG C, minus 30 DEG C, minus 35 DEG C and minus 40 DEG C, and chilling to setting temperatures of refrigerator, wherein the temperature fluctuation ranges of the refrigerators are +/-1 DEG C.

Pretreatment of tuna meat: carrying out a rapid 6cm^{∗}5cm^{∗}3cm block-cutting treatment on tuna meat under a sterile condition within super clean bench with a mass of (90±5) g each block, both the chopping board and cutter for cutting the tuna meat are sterilized under high temperature.

Temperature measuring: inserting the thermocouple probe of multipoint temperature collecting device in the geometric center of tuna blocks from the center of 5cm^{∗}3cm surface, collecting the central temperature variation of tuna blocks, completely immersing the tuna blocks in the salt water, directly placing a control group in a refrigerator at minus 25 DEG C.

The salt penetration amount of tuna blocks and measuring condition of quality indexes: when the central temperature of the tuna blocks achieves minus 18 DEG C, rapidly taking out the beaker and the tuna blocks, and measuring the salt penetration amount and the various quality indexes.

The invention can reduce the impact on the taste of tuna meat in the process of immersion, and improve its quality with low cost and simple operation.

### Brief Description of Drawings

Fig.1 is the temperature variation in the process of freezing tuna.
Fig.2 is salt penetration amount of tuna blocks after different freezing modes.
Fig.3 is loss rate variation of tuna juice after different freezing modes.
Fig.4 is TVB-N value variation trend of tuna after different freezing modes.
Fig.5 is TBA value variation of tuna after different freezing modes.

### Detailed Description of Preferred Embodiments

The invention is further explained with reference to embodiments for better understanding.
Embodiment 1: this embodiment is used for reducing the salt penetration amount of immersion chilling and freezing tuna by CaCl₂ salt water, and improving the quality of tuna meat after being frozen, comprising following steps:
   (1) Preparing experiment materials: picking back meat of bigeye tuna, purchased from Zhejiang Fenghui Ocean Fishing Co., Ltd, which is direct vacuumized and freezing storaged under minus 55 DEG C after being captured, killed and frozen, picking tuna meat with even individual, uniform meat color, and certain regular shape, and delivering back to laboratory for treatment within 5 min under frozen condition.
   (2) Preparing low temperature CaCl₂ salt water: 1) preparing 400g of the CaCl₂ salt water with the mass concentration of 25.70%; 2) placing in 600mL of the beaker, placing in refrigerators at minus 25 DEG C and chilling to setting temperatures of refrigerator, wherein the temperature fluctuation ranges of the refrigerators are +/-1 DEG C.
      Pretreatment of tuna: carrying out a rapid 6cm^{∗}5cm^{∗}3cm block-cutting treatment on fresh tuna meat under a sterile condition within super clean bench with a mass of (90±5) g each block.
   (3) Experiment treatment: preparing 400g of the CaCl₂ salt water with the mass concentrations of 25.70%, placing in 600mL of the beaker, placing in refrigerators at minus 25 DEG C and chilling to setting temperatures of refrigerator, wherein the temperature fluctuation ranges of the refrigerators are +/-1 DEG C, carrying out a rapid 6cm^{∗}5cm^{∗}3cm block-cutting treatment on fresh tuna meat under a sterile condition within super clean bench, inserting the thermocouple probe of multipoint temperature collecting device in the geometric center of tuna blocks from the center of 5cm ^{∗}3cm surface, collecting the central temperature variation of tuna blocks, completely immersing the tuna blocks in the salt water, directly placing a control group in a refrigerator at minus 25 DEG C, and when the central temperature of the tuna blocks achieves minus 18 DEG C, rapidly taking out the beaker and the tuna blocks, the salt penetration amount of frozen tuna blocks of this embodiment is 4.07%, loss rate of juice is 1.2%, Total Volatile Basic Nitrogen (TVB-N) value is 10.55mg/100g, and Thiobarbituric Acid (TBA) value is 0.675mg/100g.
Embodiment 2: this embodiment is used for reducing the salt penetration amount of immersion chilling and freezing tuna by CaCl₂ salt water, and improving the quality of tuna meat after being frozen, comprising following steps:
   (1) Preparing experiment materials: picking back meat of bigeye tuna, purchased from Zhejiang Fenghui Ocean Fishing Co., Ltd, which is direct vacuumized and freezing storaged under minus 55 DEG C after being captured, killed and frozen, picking tuna meat with even individual, uniform meat color, and certain regular shape, and delivering back to laboratory for treatment within 5 min under frozen condition.
   (2) Preparing low temperature CaCl₂ salt water: 1) preparing 400g of the CaCl₂ salt water with the mass concentration of 27.50%. 2) placing in 600mL of the beaker, placing in refrigerators at minus 30 DEG C and chilling to setting temperatures of refrigerator, wherein the temperature fluctuation ranges of the refrigerators are +/-1 DEG C.
      Pretreatment of tuna: carrying out a rapid 6cm^{∗}5cm^{∗}3cm block-cutting treatment on fresh tuna meat under a sterile condition within super clean bench with a mass of (90±5) g each block.
   (3) Experiment treatment: preparing 400g of the CaCl₂ salt water with the mass concentrations of 27.50%, placing in 600mL of the beaker, placing in refrigerators at minus 30 DEG C and chilling to setting temperatures of refrigerator, wherein the temperature fluctuation ranges of the refrigerators are +/-1 DEG C, carrying out a rapid 6cm^{∗}5cm^{∗}3cm block-cutting treatment on fresh tuna meat under a sterile condition within super clean bench, inserting the thermocouple probe of multipoint temperature collecting device in the geometric center of tuna blocks from the center of 5cm ^{∗}3cm surface, collecting the central temperature variation of tuna blocks, completely immersing the tuna blocks in the salt water, directly placing a control group in a refrigerator at minus 25 DEG C, and when the central temperature of the tuna blocks achieves minus 18 DEG C, rapidly taking out the beaker and the tuna blocks, the salt penetration amount of frozen tuna blocks of this embodiment is 4.01%, loss rate of juice is 1.1%, Total Volatile Basic Nitrogen (TVB-N) value is 10.5mg/100g, and Thiobarbituric Acid (TBA) value is 0.65mg/100g.
Embodiment 3: this embodiment is used for reducing the salt penetration amount of immersion chilling and freezing tuna by CaCl₂ salt water, and improving the quality of tuna meat after being frozen, comprising following steps:
   (1) Preparing experiment materials: picking back meat of bigeye tuna, purchased from Zhejiang Fenghui Ocean Fishing Co., Ltd, which is direct vacuumized and freezing storaged under minus 55 DEG C after being captured, killed and frozen, picking tuna meat with even individual, uniform meat color, and certain regular shape, and delivering back to laboratory for treatment within 5 min under frozen condition.
   (2) Preparing low temperature CaCl₂ salt water: 1) preparing 400g of the CaCl₂ salt water with the mass concentration of 28.40%. 2) placing in 600mL of the beaker, placing in refrigerators at minus 35 DEG C and chilling to setting temperatures of refrigerator, wherein the temperature fluctuation ranges of the refrigerators are +/-1 DEG C.
      Pretreatment of tuna: carrying out a rapid 6cm^{∗}5cm^{∗}3cm block-cutting treatment on fresh tuna meat under a sterile condition within super clean bench with a mass of (90±5) g each block.
   (3) Experiment treatment: preparing 400g of the CaCl₂ salt water with the mass concentrations of 28.40%, placing in 600mL of the beaker, placing in refrigerators at minus 35 DEG C and chilling to setting temperatures of refrigerator, wherein the temperature fluctuation ranges of the refrigerators are +/-1 DEG C, carrying out a rapid 6cm^{∗}5cm^{∗}3cm block-cutting treatment on fresh tuna meat under a sterile condition within super clean bench, inserting the thermocouple probe of multipoint temperature collecting device in the geometric center of tuna blocks from the center of 5cm ^{∗}3cm surface, collecting the central temperature variation of tuna blocks, completely immersing the tuna blocks in the salt water, directly placing a control group in a refrigerator at minus 25 DEG C, and when the central temperature of the tuna blocks achieves minus 18 DEG C, rapidly taking out the beaker and the tuna blocks, the salt penetration amount of frozen tuna blocks of this embodiment is 3.95%, loss rate of juice is 0.9%, Total Volatile Basic Nitrogen (TVB-N) value is 10.42mg/100g, and Thiobarbituric Acid (TBA) value is 0.625mg/100g.
Embodiment 4: this embodiment is used for reducing the salt penetration amount of immersion chilling and freezing tuna by CaCl₂ salt water, and improving the quality of tuna meat after being frozen, comprising following steps:
   (1) Preparing experiment materials: picking back meat of bigeye tuna, purchased from Zhejiang Fenghui Ocean Fishing Co., Ltd, which is direct vacuumized and freezing storaged under minus 55 DEG C after being captured, killed and frozen, picking tuna meat with even individual, uniform meat color, and certain regular shape, and delivering back to laboratory for treatment within 5 min under frozen condition.
   (2) Preparing low temperature CaCl₂ salt water: 1) preparing 400g of the CaCl₂ salt water with the mass concentration of 29.40%. 2) placing in 600mL of the beaker, placing in refrigerators at minus 40 DEG C and chilling to setting temperatures of refrigerator, wherein the temperature fluctuation ranges of the refrigerators are +/-1 DEG C.
      Pretreatment of tuna: carrying out a rapid 6cm^{∗}5cm^{∗}3cm block-cutting treatment on fresh tuna meat under a sterile condition within super clean bench with a mass of (90±5) g each block.
   (3) Experiment treatment: preparing 400g of the CaCl₂ salt water with the mass concentrations of 29.4%, placing in 600mL of the beaker, placing in refrigerators at minus 40 DEG C and chilling to setting temperatures of refrigerator, wherein the temperature fluctuation ranges of the refrigerators are +/-1 DEG C, carrying out a rapid 6cm^{∗}5cm^{∗}3cm block-cutting treatment on fresh tuna meat under a sterile condition within super clean bench, inserting the thermocouple probe of multipoint temperature collecting device in the geometric center of tuna blocks from the center of 5cm ^{∗}3cm surface, collecting the central temperature variation of tuna blocks, completely immersing the tuna blocks in the salt water, directly placing a control group in a refrigerator at minus 25 DEG C, and when the central temperature of the tuna blocks achieves minus 18 DEG C, rapidly taking out the beaker and the tuna blocks, the salt penetration amount of frozen tuna blocks of this embodiment is 3.81%, loss rate of juice is 0.75%, Total Volatile Basic Nitrogen (TVB-N) value is 10.35mg/100g, and Thiobarbituric Acid (TBA) value is 0.575mg/100g.

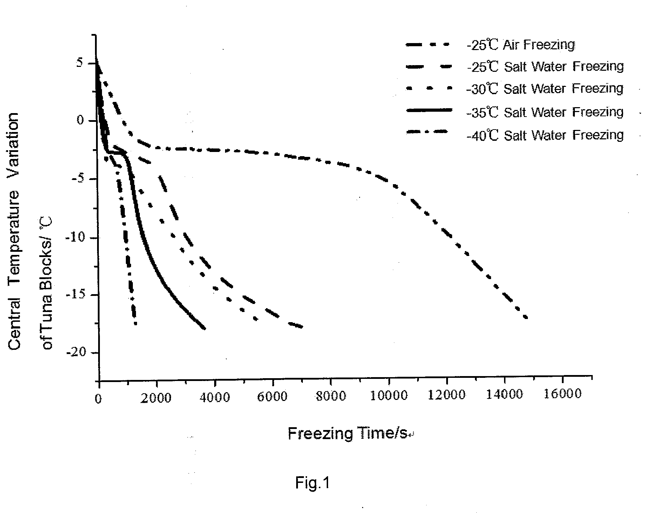

Experiment results show, as Fig.1 shown, when frozen at minus 25 DEG C salt water and the central temperature of the tuna blocks achieves minus 18 DEG C, time needed is 6991 seconds, when frozen at minus 30 DEG C salt water and the central temperature of the tuna blocks achieves minus 18 DEG C, time needed is 6000 seconds, when frozen at minus 35 DEG C salt water and the central temperature of the tuna blocks achieves minus 18 DEG C, time needed is 4000 seconds, when frozen at minus 40 DEG C salt water and the central temperature of the tuna blocks achieves minus 18 DEG C, time needed is only 1311 seconds, and as the contrast group, and when frozen at minus 25 DEG C air and the central temperature of the tuna blocks achieves minus 18 DEG C, time needed is 15000 seconds. So the conclusion is that the freezing effect of CaCl₂ salt water is better, and the freezing temperature of salt water is lower, the freezing speed of tuna blocks is faster.

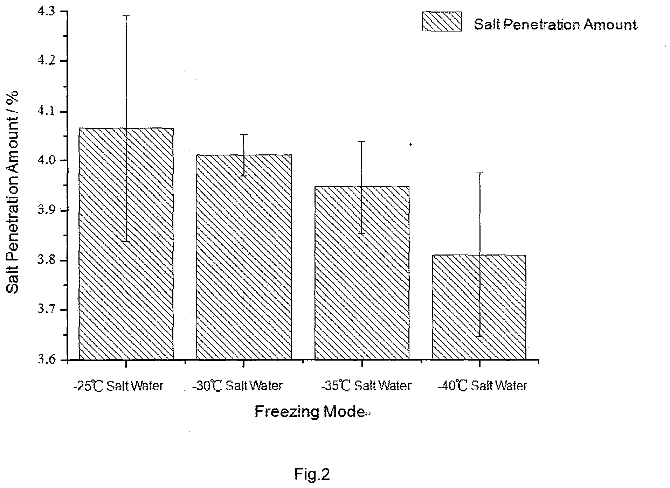

As Fig. 2 shown, when frozen at minus 25 DEG C salt water, the salt penetration amount of tuna blocks is 4.07%, when frozen at minus 30 DEG C salt water, the salt penetration amount of tuna blocks is 4.01%, when frozen at minus 35 DEG C salt water, the salt penetration amount of tuna blocks is 3.95%, and when frozen at minus 40 DEG C salt water, the salt penetration amount of tuna blocks is only 3.81%. So the conclusion is that the freezing temperature of salt water is lower, the salt penetration amount is lower, and the freezing speed of tuna blocks is faster, the taste of tuna meat is better.

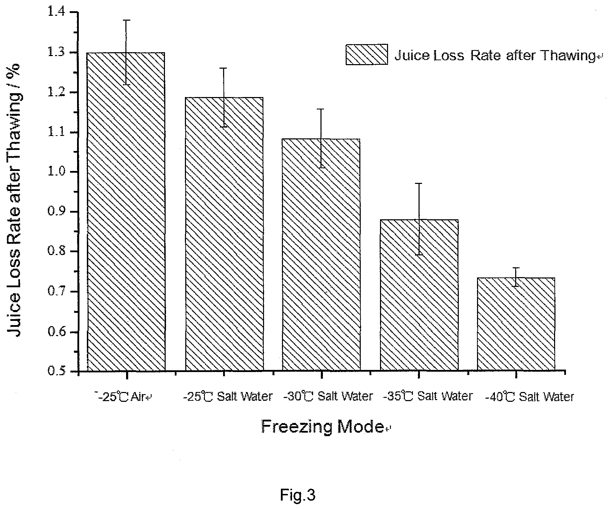

As Fig. 3 shown, when frozen at minus 25 DEG C salt water, the juice loss rate of tuna blocks is 1.2%, when frozen at minus 30 DEG C salt water, the juice loss rate of tuna blocks is 1.1%, when frozen at minus 35 DEG C salt water, the juice loss rate of tuna blocks is 0.9%, and when frozen at minus 40 DEG C salt water, the juice loss rate of tuna blocks is only 0.75%. So the conclusion is that the freezing temperature of salt water is lower, the juice loss rate of tuna blocks after thawing is lower.

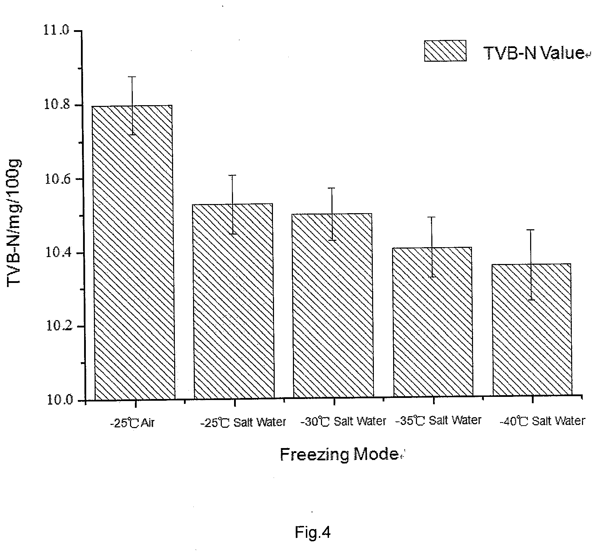

As Fig. 4 shown, when frozen at minus 25 DEG C salt water, the TVB-N value of tuna blocks is 10.55 mg/100g, when frozen at minus 30 DEG C salt water, the TVB-N value of tuna blocks is 10.5 mg/100g, when frozen at minus 35 DEG C salt water, the TVB-N value of tuna blocks is 10.42 mg/100g, and when frozen at minus 40 DEG C salt water, the TVB-N value of tuna blocks is 10.35 mg/100g. So the conclusion is that the freezing temperature of salt water is lower, the TVB-N value is lower and the taste of tuna meat is better.

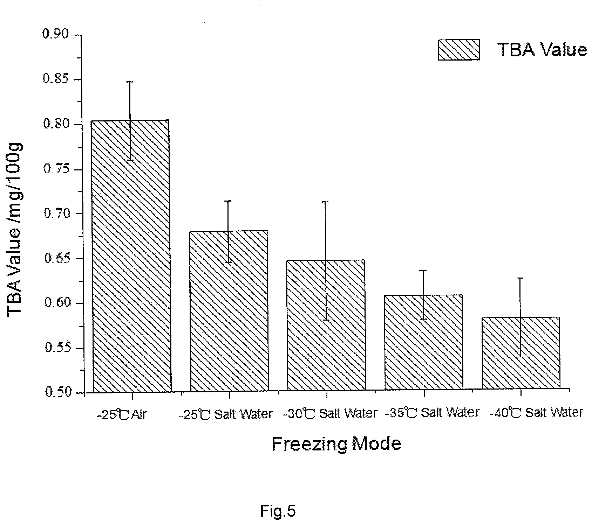

As Fig.5 shown, when frozen at minus 25 DEG C salt water, the TBA value of tuna blocks is 0.675mg/100g, when frozen at minus 30 DEG C salt water, the TBA value of tuna blocks is 0.65mg/100g, when frozen at minus 35 DEG C salt water, the TBA value of tuna blocks is 0.625mg/100g, and when frozen at minus 40 DEG C saltwater, the TBA value of tuna blocks is 0.575mg/100g. So the conclusion is that the freezing temperature of salt water is lower, the TBA value is lower and the taste of tuna meat is better.

Compared with ordinary air freezing, CaCl₂ salt water freezing can significantly improve freezing speed, and maintain fresh quality of tuna meat; the temperature of CaCl₂ salt water is lower, the quality of aquatic product is higher under same freezing temperature; when the same freezing end is achieved, the concentration of CaCl₂ salt water is higher, the corresponding salt water temperature is lower, the freezing speed of tuna meat is faster, and the salt penetration amount is lower than CaCl₂ salt water with low concentration, which has little impact on taste of tuna meat. The lowest salt penetration amount of CaCl₂ salt water is 3.81% under minus 40 DEG C, in practical use, the captured tuna is directly frozen after removing head and visera and cleaning, in this way, the penetration of salt will be reduced due to the tuna skin, so it is suggested to freeze large block of tuna (especially the whole tuna) by salt water.

## Claims

1. A method of freezing tuna blocks by immersion chilling and freezing with CaCl₂ solution, comprising following steps:
preparing a tuna; wherein the tuna is stored in a vacuum environment with a temperature of minus 55 DEG C for 5 minutes;
preparing a CaCl₂ solution with a mass concentrations of 29.40%; wherein the CaCl₂ solution has a freezing point of minus 50.1 DEG C;
placing the prepared CaCl₂ solution into a refrigerator set at minus 40 DEG C; and cooling the prepared CaCl₂ solution to minus 40 DEG C; wherein an error range of temperature of the refrigerator is +/-1 DEG C;
rapidly cutting the tuna into blocks under a sterile condition on a super clean bench; wherein a mass of each tuna block is (90±5) g and a size of each tuna block is 6cm^{∗}5cm^{∗}3cm;
completely immersing the tuna blocks in the CaCl₂ solution and taking out the tuna blocks from the CaCl₂ solution when a central temperature of the tuna blocks achieves minus 18∼minus 25 DEG C.

2. The method according to claim 1, **characterized in that** when the central temperature of the tuna blocks achieves minus 18 DEG C, the tuna blocks are rapidly taken out from the CaCl₂ solution.

## Patentansprüche

1. Verfahren zum Einfrieren von Thunfischblöcken durch Tauchkühlung und Einfrieren mit einer CaCl₂-Lösung, umfassend die folgenden Schritte:
Zubereiten des Thunfisches; wobei der Thunfisch für 5 Minuten in einer Vakuumumgebung mit einer Temperatur von -55°C gelagert wird;
Herstellen einer CaCl₂-Lösung mit einer Massenkonzentration von 29,40%; wobei die CaCl₂ - Lösung einen Stockpunkt von -50,1°C aufweist;
Einlegen der hergestellten CaCl₂-Lösung in einen Kühlschrank mit einer Temperatur von -40°C; und Abkühlen der hergestellten CaCl₂-Lösung auf -40°C; wobei ein Fehlerbereich der Temperatur des Kühlschranks +/- 1°C beträgt;
schnelles Schneiden des Thunfisches in Blöcke unter sterilen Bedingungen auf einer super sauberen Bank; wobei jeder Thunfischblock eine Masse von (90±5) g und eine Größe von 6 cm x 5 cm x 3 cm aufweist;
vollständiges Eintauchen der Thunfischblöcke in die CaCl₂-Lösung und Herausnehmen der Thunfischblöcke aus der CaCl₂-Lösung, wenn eine zentrale Temperatur der Thunfischblöcke -18∼-25°C erreicht.

2. Verfahren nach Anspruch 1, **dadurch gekennzeichnet, dass** die Thunfischblöcke schnell aus der CaCl₂ Lösung herausgenommen werden, wenn die zentrale Temperatur der Thunfischblöcke -18°C erreicht.

## Revendications

1. Procédé de congélation de blocs de thon par refroidissement et congélation par immersion avec une solution de CaCl₂, le procédé comprenant les étapes consistant à:
préparer un thon; dans lequel ledit thon est stocké dans un environnement sous vide à une température de moins 55°C pendant 5 min;
préparer une solution de CaCl₂ avec une concentration massique de 29,40%; dans lequel ladite solution de CaCl₂ a un point de congélation de moins 50,1°C;
placer ladite solution de CaCl₂ préparée dans un congélateur réglé à moins 40°C; et refroidir ladite solution de CaCl₂ préparée à moins 40°C; dans lequel une plage d'erreur de température dudit congélateur est de +/-1°C;
couper rapidement ledit thon en blocs dans un état stérile sur un banc super propre; dans lequel une masse de chaque bloc de thon est de 90±5 g et une taille de chaque bloc de thon est de 6 cmx5 cmx3 cm;
complètement immerger lesdits blocs de thon dans ladite solution de CaCl₂ et retirer lesdits blocs de thon de ladite solution de CaCl₂ lorsqu'une température centrale desdits blocs de thon se situe moins 18-moins 25°C.

2. Procédé selon la revendication 1, **caractérisé en ce que** lorsque ladite température centrale desdits blocs de thon atteint moins 18°C, lesdits blocs de thon sont rapidement retirés de ladite solution de CaCl₂.
